# DEMANDE DE BREVET EUROPEEN

(11) **EP 1 853 001 A2**
(43) Date de publication de la demande: **07.11.2007**
(21) Numéro de dépôt: 07107198.9
(22) Date de dépôt: 30.04.2007
(51) Int. Cl.: H04L 12/14, H04L 12/28, H04M 15/00

(54) **Facturation temps-réel pour terminaux bi-modes**

(30) Priorité: 05.05.2006 FR 0651647
(71) Demandeur: Alcatel Lucent, 75008 Paris (FR)
(72) Inventeur: Tang-Taye, Jacky, 78490 Montfort l'Amaury (FR); Besnard, Loïc, 92130 Issy les Moulineaux (FR)
(74) Mandataire: Chaffraix, Sylvain

(57) **Abrégé**

Dispositif de facturation temps-réel (BS) comportant des moyens pour recevoir des premiers messages provenant d'un centre de commutation mobile (MSC) d'un réseau cellulaire de télécommunication, relatifs à un terminal mobile (MT) connecté à une station de base (BTS) du réseau cellulaire ou à un point d'accès d'un réseau de communication à paquets (UMA) connecté à ce même centre de commutation mobile, et pouvant effectuer des basculements entre le point d'accès (AP) et la station de base (BTS). Ce dispositif dispose en outre de moyens de réception de seconds messages relatifs à la durée de connexion du terminal mobile (MT) au réseau de communication à paquets (UMA) et des moyens pour corréler les premiers et les seconds messages afin d'en tirer une facturation temps-réel globale pour le terminal mobile.

## Description

La présente invention est relative au domaine des réseaux cellulaires de communications, et plus précisément à la facturation temps-réel des communications sur de tels réseaux.

Ce terme de facturation temps-réel s'oppose à la facturation différée qui consiste à traiter a posteriori les informations disséminées dans le réseau de communication afin de retracer l'utilisation qui en a été faite par l'utilisateur et de lui transmettre une facture correspondant à cette utilisation. La facturation temps-réel ne peut pas reposer sur ce traitement a posteriori et nécessite de traiter les flux d'information de façon dynamique. Ce mode de facturation s'applique notamment bien à la facturation prépayée. C'est par exemple le cas lorsque l'utilisateur dispose d'un forfait et que le réseau doit déterminer le moment où ce forfait est consommé et que la communication doit être interrompue.

Plusieurs types de réseaux cellulaires de communication co-existent, de sorte que des terminaux mobiles sont aujourd'hui aptes à se connecter à ces différents types, en fonction de la situation et de la disponibilité de ces réseaux. On entend le terme « terminal mobile » dans son sens le plus large, couvrant tout terminal de communication capable d'échanger des données avec un réseau cellulaire, comme par exemple un téléphone mobile, un assistant numérique personnel (ou PDA pour « *Personal Digital Assistant* » en langue anglaise), un ordinateur portable équipé d'une carte d'interface de radio-communication, un équipement mobile du type de ceux portant la marque « Blackberry^{™} » etc.

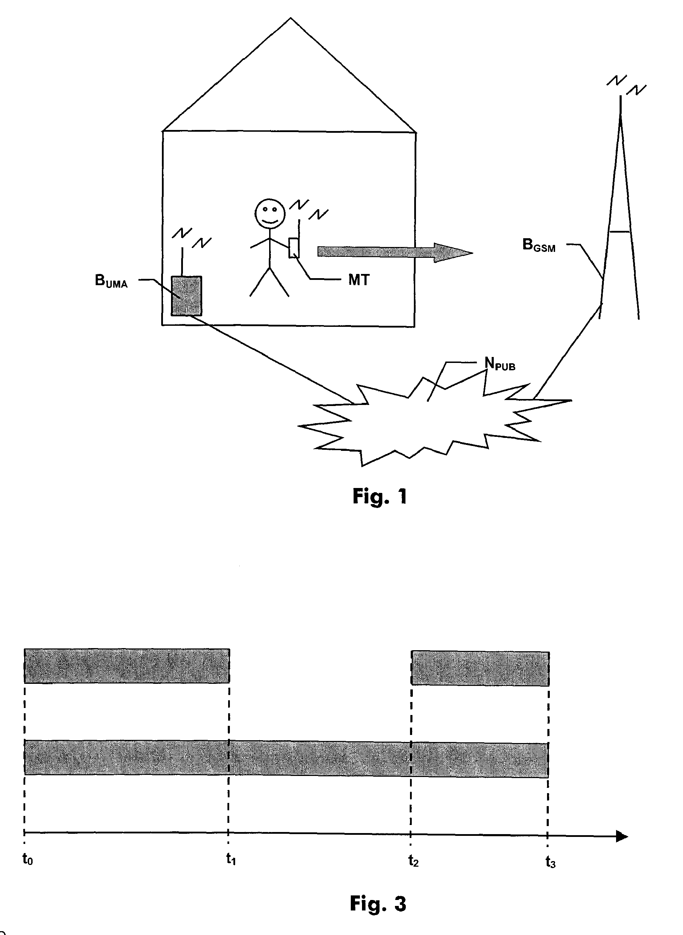

Sur la figure 1 est représentée une situation dans laquelle peut se trouver l'utilisateur d'un tel terminal mobile MT. Il peut posséder chez lui une borne d'accès B_{UMA} d'un réseau de communication à paquets lui permettant de se connecter à un réseau public de communication N_{PUB} afin, par exemple, d'établir des appels de téléphonie avec une tierce personne, non représentée sur la figure.

Ce réseau de communication à paquets est par exemple un réseau de communication de type UMA (pour « *Unlicensed Mobile Access* » en langue anglaise). Ce type de réseau est une extension des normes GSM et/ou GPRS (pour « *General Packet Radio Service* ») pour des environnements de taille limitée tel des centres commerciaux, des gares, des aéroports, des établissements privés etc., en utilisant les interfaces radios disponibles au sein de l'établissement (par exemple une borne WiFi) et un réseau d'accès à paquets de technologie IP (*Internet Protocol*). Ce réseau est dit « large bande », c'est-à-dire qu'il est prévu pour permettre la transmission de la voix et, éventuellement, de la vidéo avec une qualité de service jugée suffisante. Un exemple de réseau d'accès large-bande est un réseau de type ADSL (« *Asynchronous Digital Subscriber Line* »).

La maison de l'utilisateur de la figure 1 est en outre couverte par le réseau public de radio-communication, par exemple de type GSM (acronyme de « *Global System for Mobile communications* »). Son terminal mobile MT est bi-mode et peut se connecter à la fois à la station de base B_{GSM} et à la borne d'accès B_{UMA}.

À l'intérieur de sa maison, l'utilisateur du terminal MT se connecte préférentiellement à sa borne d'accès B_{UMA}. Lorsqu'il sort de sa maison, il sort du champ de sa borne d'accès B_{UMA}, et il doit se connecter en utilisant la station de base B_{GSM}·

D'une façon générale, les opérateurs de téléphonie mobile peuvent appliquer des politiques de facturation différentes selon le type de réseau de communication utilisées. Ainsi, l'utilisation d'un réseau de communication à paquets (UMA) peut être facturée moins cher que l'utilisation d'un réseau GSM.

Mais un problème se pose lorsque l'utilisateur du terminal mobile se déplace pendant une communication. Par exemple, il débute sa communication à l'intérieur de sa maison par l'intermédiaire de la borne d'accès B_{UMA}; puis il sort et la communication est rompue avec la borne d'accès B_{UMA} tandis que le terminal mobile se connecte à la station de base B_{GSM}. Ce mécanisme de déconnexion/connexion est bien connu sous le nom de basculement (« *handover* ») et est géré d'une façon transparente pour l'utilisateur. Mais les dispositifs de facturation ne sont pas informés convenablement de ces handovers. Aussi, la facturation ne peut pas tenir compte du basculement vers un autre réseau et elle ne peut se baser que sur la base de l'utilisation du premier réseau.

Dans le cadre d'une facturation temps-réel, il n'existe pas de solution à ce jour pour résoudre ce problème, hormis l'utilisation de politiques de facturation identiques pour l'ensemble des réseaux de communication. Cette demi-solution n'est toutefois pas souhaitable d'un point de vue commercial.

Des solutions ont été proposées pour certains réseaux particuliers. On peut par exemple citer les demandes de brevets WO 2006/035332, EP 1 469410, WO 01/76297 ou US 2002/191575. Mais aucune ne peut s'appliquer au domaine de l'UMA. Ce type de réseau, se basant sur les infrastructures GSM existantes, ne permet en effet pas l'utilisation de la signalisation, qui est à la base de ces solutions.

Le but de la présente invention est donc de proposer une solution technique pour permettre une facturation temps-réel globale prenant en compte les basculements d'un réseau à l'autre et les différences de politiques de facturation d'un réseau à l'autre.

Afin d'atteindre ce but, l'invention a pour premier objet un système pour la facturation temps-réel d'un terminal mobile connecté à une station de base d'un réseau cellulaire de télécommunication ou à un point d'accès d'un réseau de communication de type UMA, les deux réseau étant connectés entre eux. Le terminal mobile peut effectuer des basculements entre ce point d'accès et cette station de base

Le système comporte un dispositif de facturation temps-réel disposant de moyens pour recevoir des premiers messages provenant d'un centre de commutation mobile du réseau cellulaire de télécommunication, et relatifs au terminal mobile (MT)

Le système selon l'invention se caractérise en ce que le dispositif de facturation temps-réel dispose en outre :
- de moyens de réception de seconds messages relatifs à la durée de connexion du terminal mobile au réseau de communication à paquets de type UMA, provenant d'un contrôleur de réseau au travers d'un dispositif d'authentification, au moyen d'une interface définie pour la transmission de ces seconds messages, et
- des moyens pour corréler les premiers et les seconds messages afin d'en tirer une facturation temps-réel globale pour le terminal mobile.

Selon un mode de réalisation de l'invention, cette interface définie pour la transmission des seconds messages peut être distincte de l'interface utilisée pour la transmission des messages d'authentification entre le contrôleur de réseau et le dispositif d'authentification.

Il peut s'agir d'une interface normalisée Wa. Elle peut également être prévue pour transmettre des messages conformes aux normes Radius et/ou Diameter.

L'interface utilisée pour la transmission des messages d'authentification peut, quant-à-elle, être une interface normalisée Wm.

Selon une mise en oeuvre de l'invention, lLa corrélation peut être effectuée sur la base d'un identifiant personnel de l'utilisateur du terminal mobile. Cet identifiant personnel peut, optionnellement, être le numéro MSISDN.

Les seconds messages peuvent alors contenir cet identifiant personnel transmis à travers l'interface reliant le dispositif d'authentification et le contrôleur de réseau.

Selon un mode de réalisation de l'invention, le dispositif de facturation temps-réel peut être intégré dans une plate-forme de services intelligents pour réseaux mobiles de communication.

Le dispositif de facturation temps-réel et le dispositif d'authentification peuvent communiquer par une interface basée sur l'interface normalisée Wd.

Un second objet de l'invention est un réseau de communication comportant un système tel que précédemment décrit.

L'invention et ses avantages apparaîtront de façon plus claire dans la description de mises en oeuvre qui va suivre, en liaison avec les figures annexées.
La figure 1, précédemment commentée, illustre le contexte dans lequel s'inscrit l'invention et le problème technique qu'elle résout.

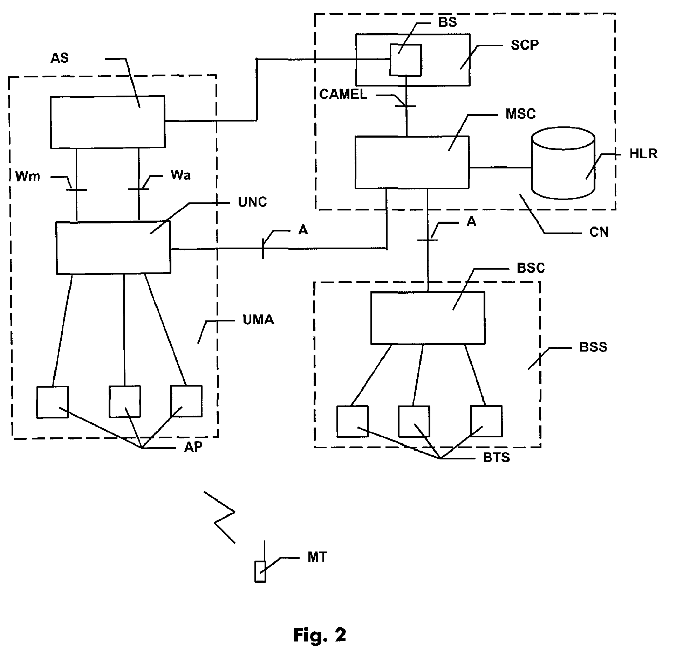

La figure 2 schématise l'architecture générale sous-jacente à l'invention.
La figure 3 est un organigramme schématique représentant les intervalles d'utilisation des deux réseaux de communication par le terminal mobile.

Typiquement, un réseau cellulaire de communication, de type GSM ou UMTS (pour « *Universal Mobile Telecommunication System* » en langue anglaise) est composé d'un réseau d'accès radio BSS (« *Base Station sub-System* ») et d'un réseau de coeur CN (« *Core Network* »).

Le réseau d'accès BSS comporte lui-même un ensemble de stations de base BTS pourvues d'interfaces radio permettant à un terminal mobile MT de se connecter au réseau d'accès BSS lorsqu'il est localisé dans une ou des cellules associées à cette station de base. Ces stations de base BTS sont connectées à des contrôleurs de réseau radio BSC (pour « Base Station Controller »).

Le réseau de coeur CN comporte principalement des centres de commutations mobiles MSC qui sont reliés par une interface dite « A » aux contrôleurs de réseau radio BSC. Il comporte en outre une base de données HLR ou VLR (« *Home Location Register »* et « *Visitor Location Register* ») comportant des informations sur les terminaux mobiles, tant statiques que dynamiques, comme par exemples la dernière localisation connue, la dernière cellule visitée etc.

Le centre de commutation mobile MSC est en outre connecté à un dispositif de facturation BS.

Ce dispositif de facturation BS peut classiquement faire partie d'une plate-forme de services intelligents SCP (« *Service Connection Point* »), notamment disposant d'interfaces conformes à l'architecture CAMEL.

CAMEL (pour « *Customized Application for Mobile Enhanced network* Logic ») peut être vu comme une extension, ou une adaptation, du modèle des réseaux intelligents (ou lN, *Intelligent Networks*) pour les réseaux de communication mobiles. Une plate-forme CAMEL permet donc de fournir aux utilisateurs des terminaux mobiles et aux opérateurs des services similaires de ceux fournis par le Réseau Intelligent aux utilisateurs et opérateurs de réseaux fixes à commutation, notamment la facturation des appels et de l'utilisation des réseaux.

Via une interface CAMEL, le centre de commutation mobile MSC transmet alors des « premiers » messages au dispositif de facturation BS (pour « *Billing server* »). Ces messages sont relatifs au terminal mobile MT, et à sa durée de connexion à la station de base BTS. (puisque la facturation est essentiellement basée sur la durée de connexion.)

Les mécanismes de facturation sont variés mais il s'agit, en première approche, de facturer en fonction d'un coût par quantum de temps.

Le réseau de communication à paquets UMA (pour « *Unlicensed Mobile Access* » ; ou plus simplement appelé « réseau UMA ») permet l'accès aux réseaux de communication GSM, GPRS ou UMTS en utilisant des bandes de fréquences radios non soumises à licences. Il peut utiliser des bornes ou points d'accès AP disposant d'interfaces WiFi, Bluetooth^{™}, ou 802.11 *(« Wireless LAN Medium Access Control (MAC) and Physical Layer (PHY) specifications* »).

Les réseaux UMA sont plus précisément décrits dans une série de documents intitulés « Unlicensed Mobile Access (UMA), User perspective (Stage 1), R1.0.0 » ; « Unlicensed Mobile Access (UMA), Architecture (Stage 2), R1.0.0 » et « Unlicensed Mobile Access (UMA), Protocols (Stage 3) », R1.0.1.

Leurs définitions reposent également sur un ensemble de spécifications issues de l'organisme 3GPP, notamment pour ce qui concerne l'ensemble des interfaces permettant de connecter les dispositifs de l'architecture UMA.

Ces points d'accès AP sont connectés, par un réseau de type lP (*Internet Protocol*) non représenté, à un contrôleur de réseau UNC (pour « *UMA Network Controller* »).

Ce contrôleur de réseau UNC possède de nombreux rôles. Tout d'abord, il permet la transmission des trafics entre le réseau UMA et le réseau de coeur CN. Il possède pour ce faire une interface « A » qui lui permet de coopérer avec le centre de commutation mobile MSC. Cette interface « A » est conforme à la spécification 3GPP TS 48.008.

De cette façon, le centre de commutation mobile MSC peut transmettre des « premiers messages » (typiquement CAMEL) vers le dispositif de facturation temps-réel BS lorsque le terminal mobile MT est connecté à un point d'accès AP du réseau à commutation de paquets UMA. Ainsi, le dispositif de facturation BS reçoit des premiers messages dès lors que le terminal mobile MT est connecté soit à une station de base BTS, soit à un point d'accès AP.

En outre, selon le document « UMA architecture (Stage 2) », cité précédemment, il possède un ensemble d'interfaces avec un dispositif d'authentification AS ; cet ensemble pouvant être réduit à un unique élément. Notamment, il possède une interface « Wm » pour permettre d'authentifier l'utilisateur du terminal mobile MT connecté au réseau UMA afin de l'autoriser ou non à accéder au réseau de coeur CN. Cette interface « Wm » est spécifiée dans le document TS 29.234 issu du 3GPP. Ce dispositif d'authentification est, selon les spécifications UMA, un serveur proxy AAA (pour *« Authentification, Autorisation, Accounting* » en anglais).

Le contrôleur de réseau UNC transmet des requêtes d'authentification au dispositif d'authentification AS, lorsqu'un utilisateur de terminal mobile MT souhaite accéder au réseau de coeur CN. Sur la base d'un annuaire, celui-ci est prévu pour authentifier les utilisateurs et leur délivrer ou non l'accès demandé. Une réponse est transmise au contrôleur de réseau UNC qui décide alors d'établir ou non une connexion entre le terminal mobile MT et le réseau de coeur CN.

En outre, selon l'invention, des requêtes de début et fin de facturation sont également transmises depuis le contrôleur de réseau UNC vers le dispositif d'authentification AS lorsque le terminal mobile MT commence ou interrompt la communication (à son initiative ou à celle d'une autre partie à l'appel) ou lorsqu'il bascule (« *handover* ») vers un autre réseau, notamment le réseau cellulaire de communication (GSM, UMTS, GPRS...).

Selon l'invention, le dispositif d'authentification AS dispose en outre de moyens pour transmettre les requêtes de début et fin de facturation reçues du contrôleur de réseau UNC vers le dispositif de facturation BS du réseau cellulaire de communication. Il dispose pour cela d'une interface permettant la réception de ces requêtes de début et fin de facturation provenant du contrôleur de réseau UNC.

Toutefois, l'interface « Wm » pourtant spécifiée dans l'architecture UMA n'est pas suffisante pour mettre en oeuvre l'invention puisqu'elle ne permet pas de transmettre l'ensemble des nécessaires à la facturation. En effet, cette interface n'est utilisée que pour l'authentification et l'autorisation et elle n'est pas prévue pour la transmission de requêtes de début et fin de facturation, et plus généralement de messages conformes aux différentes normes de facturation, tels Radius ou Diameter.

Afin de résoudre ce problème technique supplémentaire, il est proposé d'utiliser l'interface « Wa », définie par le 3GPP pour permettre la communication entre un contrôleur d'accès WLAN et un serveur d'authentification AS, pour permettre l'accès au réseau Internet à des utilisateurs d'un réseau WLAN à partir, par exemple, d'un ordinateur portable. Cette interface est définie dans le document « 3GPP system to WLAN interworking ; stage 3 », TS 29.234, version 6.5.0.

Cette interface « Wa » permet la réception de messages utilisant les protocoles de facturation comme Radius ou Diameter, et la réception des requêtes de début et fin de facturation.

Selon l'invention, le serveur d'authentification AS dispose donc d'un ensemble d'interfaces comportant au moins deux interfaces avec le contrôleur de réseau UNC : une interface « Wm » pour recevoir des requêtes en authentification (aspect non décrit dans la présente demande de brevet), et une interface « Wa » pour recevoir des requêtes de début et fin de facturation.

Ces requêtes de début et fin de facturation peuvent contenir un identifiant personnel de l'utilisateur du terminal mobile MT.

Différents identifiants peuvent être utilisés dans le cadre de l'invention. Par exemple, l'identifiant personnel de l'utilisateur de terminal mobile peut être, selon les normes GSM et UMTS, le MSISDN pour « *Mobile Station ISDN* Number ». Il s'agit du numéro connu du public de l'utilisateur. Il s'oppose donc à l'identifiant d'abonné IMSI (*International Mobile Subscriber Indentity*) qui est un numéro unique permettant au réseau d'identifier un abonné. Ce numéro est classiquement stocké dans la carte SIM de l'utilisateur et n'est pas connu de celui-ci. La correspondance entre l'identifiant d'abonné lMSl et l'identifiant personnel MSISDN est effectuée par le registre de localisation HLR *(Home Location Register).*

Cet identifiant personnel est constitué de 3 champs : le premier (CC pour « *Country Code* ») représente le pays d'appartenance de l'utilisateur ; le second (NDC pour « *National Destination Code* ») représente l'opérateur dans ce pays ; le dernier (SN pour « *Subscriber Number* ») est un numéro d'abonné attribué par l'opérateur à cet utilisateur.

Ainsi qu'évoqué précédemment et précisé dans le document 3GPP TS 29.234, il est possible d'utiliser l'interface « Wa » pour la facturation avec plusieurs protocoles, notamment Radius et Diameter.

Avec le protocole Radius, le contrôleur de réseau UNC doit envoyer un message « Accounting-Request » au dispositif d'authentification AS. Ce message comporte un attribut obligatoire « Accouting Status Type » qui peut prendre la valeur « Start » ou « Stop ».

Il possède la valeur « Start » dans deux situations :
- l'établissement d'un appel impliquant le terminal mobile MT (soit à son initiative, soit à l'initiative d'un tiers)
- l'appel était déjà établi, mais le terminal mobile bascule (« *handover* ») vers le réseau UMA et se connecte à un point d'accès AP.

Il possède la valeur « Stop » également dans deux situations :
- la terminaison d'un appel impliquant le terminal mobile MT (soit à son initiative, soit à l'initiative d'un tiers)
- l'appel n'est pas terminé, mais le terminal mobile bascule (« *handover* ») vers un autre réseau (GSM, UMTS, GPRS...).

Un autre attribut obligatoire est l'attribut « Chargeable User Identity » qui doit contenir l'identifiant personnel de l'utilisateur du terminal mobile MT, « MSISDN » ainsi que décrit précédemment.

Ainsi qu'évoqué précédemment, le dispositif d'authentification AS transmet tout ou partie des messages reçus par cette interface « Wa » vers le dispositif de facturation BS du réseau de coeur CN.

L'interface permettant à ces deux dispositifs de communiquer peut être une variante de l'interface « Wd ». Cette interface « Wd » est habituellement utilisée entre deux serveurs AAA pour se relayer des messages de type Radius ou Diameter lorsqu'un serveur considère que le traitement des messages doit être fait par un autre serveur AAA.

Ces « seconds » messages (par rapport aux premiers messages transmis par le centre de commutation mobile MSC au dispositif de facturation BS) sont relatifs à la durée de connexion du terminal MT au réseau UMA.

Le dispositif de facturation BS reçoit donc deux flux de messages ; ces messages étant représentatifs de la durée de connexion à leurs réseaux correspondants :
- un flux formés de « premiers messages » provenant du centre de commutation mobile MSC ;
- un flux formés de « seconds messages » provenant du dispositif d'authentification AS, c'est-à-dire les requêtes de début et fin de facturation.

Le dispositif de facturation BS dispose de moyens pour corréler ces premiers et seconds messages afin d'en tirer une facturation globale et en temps réel pour le terminal mobile et son utilisateur. On entend par facturation globale une facturation qui prenne en compte les temps de connexion à chacun des réseaux de communication.

Cette corrélation est rendue possible par la transmission d'un identifiant personnel de l'utilisateur du terminal mobile. Cet identifiant est en effet transmis à la fois par le mécanisme CAMEL et par les messages traversant l'interface (« Wa ») connectant le contrôleur de réseau UMC au dispositif d'authentification AS.

Les « seconds » messages, c'est-à-dire les requêtes de début et fin de facturation, contiennent l'identifiant personnel qui a été transmis à travers l'interface reliant ledit dispositif d'authentification et ledit contrôleur de réseau.

La figure 3 illustre un cas typique dans lequel le terminal mobile effectue plusieurs basculements (« hand-overs ») au cours d'une communication.

L'axe horizontal est celui du temps.

La première ligne indique l'intervalle de facturation relatif au réseau UMA. Il s'agit de l'intervalle compris entre la réception d'un message indiquant un début de facturation reçu du dispositif d'authentification AS (par exemple, un message Radius « Accounting Request » avec un attribut à « Start ») et la réception d'un message indiquant la fin de facturation (par exemple, un message Radius « Accounting Request » avec un attribut à « Stop »).

La seconde ligne indique l'intervalle de facturation relative au réseau cellulaire de communication. Conformément au modèle CAMEL, un message de début de facturation est transmis au début de la communication, et un message de terminaison de la facturation lors de la terminaison de l'appel. Contrairement au flux de messages provenant du réseau UMA, il n'y a donc pas d'interruption de l'intervalle de facturation lors d'un handover vers un réseau autre.

L'invention permet donc de résoudre les problèmes posés par une limitation actuelle de CAMEL. La version 4 de CAMEL, en cours de définition, devrait permettre de pallier cette limitation, mais il est très possible que cette version ne soit jamais déployée, conférant ainsi à l'invention un intérêt pérenne.

Le temps t₀ indique l'établissement de la communication, alors que l'utilisateur du terminal mobile MT est chez lui (ou plus généralement, lorsqu'il est proche d'une borne d'accès UMA). Il se connecte donc dans un premier temps à un point d'accès du réseau UMA. Le dispositif d'authentification AS transmet donc un message au dispositif de facturation BS. Un intervalle de facturation débute donc au temps t₀ pour le réseau UMA. Parallèlement un message CAMEL est transmis par le centre de commutation mobile MSC au même dispositif de facturation BS faisant débuter à ce même temps t₀ un intervalle facturation pour le réseau cellulaire de communication.

À un temps t₁, le terminal mobile MT sort de la zone associée au point d'accès du réseau UMA et un basculement est effectué vers le réseau cellulaire de communication. Le contrôleur de réseau UMC transmet au dispositif d'authentification AS qui lui-même le transmet au dispositif de facturation BS, un message indiquant la terminaison de la connexion (et non de la communication !). L'intervalle de facturation relatif au réseau UMA est donc terminé par le dispositif de facturation BS à ce temps t₁.

À un temps t₂, le terminal mobile MT rentre à nouveau dans le périmètre des points d'accès AP du réseau UMA. Un nouveau message est transmis par le contrôleur de réseau UNC au dispositif d'authentification AS qui lui-même le transmet au dispositif de facturation BS. Ce message permet à ce dernier de débuter un nouvel intervalle de facturation pour le réseau UMA à ce temps t₂.

À un temps t₃, la communication est terminée. Du coté du réseau UMA et du coté du réseau cellulaire de communication, des messages sont transmis jusqu'au dispositif de facturation BS. Celui-ci interrompt alors les intervalles en cours.

Ainsi, en fonction de la réception des premiers et second messages, le dispositif de facturation peut tirer une facturation globale. Dans cet exemple, il pourra applique la politique de facturation relative au réseau UMA entre les temps t₀ et t₁ et entre les temps t₂ et t₃. Entre les temps t₁ et t₂, il appliquera la politique de facturation du réseau cellulaire de communication.

Autrement dit, si le coût par quantum de temps pour le réseau UMA est C_{UMA} et le coût par quantum de temps pour le réseau cellulaire de communication est C_{GSM}, le coût global C_{G} facturé à l'utilisateur pour cette communication est C_{G} = C_{UMA} × (t₁-t₀) + C_{UMA} × (t₃-t₂) + C_{GSM} × ( t₂-t₁)

Alternativement, dans le cadre d'une mise en oeuvre prépayée, au tout début de la communication un crédit est alloué à l'utilisateur pour chacun des réseaux de communication. Ce crédit dépend du solde détenu par l'utilisateur et du coût prévisible d'utilisation des réseaux de communication. Dans une telle configuration, le système de facturation BS possède des moyens pour interrompre la communication lorsque le crédit est consommé.

## Revendications

1. Système pour la facturation temps-réel d'un terminal mobile (MT) connecté à une station de base (BTS) d'un réseau cellulaire de télécommunication ou à un point d'accès d'un réseau de communication de type UMA, les deux réseau étant connectés entre eux, et ledit terminal mobile pouvant effectuer des basculements entre ledit point d'accès (AP) et ladite station de base (BTS), ledit système comportant un dispositif de facturation temps-réel (BS) disposant de moyens pour recevoir des premiers messages provenant d'un centre de commutation mobile (MSC) dudit réseau cellulaire de télécommunication, et relatifs audit terminal mobile (MT); et étant **caractérisé en ce que** ledit dispositif de facturation temps-réel dispose en outre
- de moyens de réception de seconds messages relatifs à la durée de connexion dudit terminal mobile (MT) audit réseau de communication à paquets de type UMA, provenant d'un contrôleur de réseau (UNC) au travers d'un dispositif d'authentification (AS) au moyen d'une interface (Wa) définie pour la transmission desdits seconds messages, et
- des moyens pour corréler lesdits premiers et seconds messages afin d'en tirer une facturation temps-réel globale pour ledit terminal mobile.

2. Système selon la revendication précédente, dans lequel ladite interface définie pour la transmission desdits seconds messages est distincte de l'interface utilisée pour la transmission des messages d'authentification entre ledit contrôleur de réseau (UNC) et ledit dispositif d'authentification (AS)

3. Système selon la revendication 1 ou 2, dans lequel ladite interface définie pour la transmission desdits seconds messages est une interface normalisée Wa.

4. Système selon l'une des revendications 1 à 3, dans lequel ladite interface utilisée pour la transmission des messages d'authentification est une interface normalisée Wm.

5. Système selon l'une des revendications précédentes, dans lequel ladite interface définie pour la transmission desdits seconds messages est prévue pour transmettre des messages conformes aux normes Radius et/ou Diameter.

6. Système selon l'une des revendications précédentes, dans lequel la corrélation est effectuée sur la base d'un identifiant personnel de l'utilisateur dudit terminal mobile.

7. Système selon la revendication précédente, dans lequel ledit identifiant personnel est le numéro MSISDN.

8. Système selon la revendication 2 et l'une des revendications 5 ou 6, dans lequel lesdits seconds messages contiennent ledit identifiant personnel transmis à travers l'interface reliant ledit dispositif d'authentification et ledit contrôleur de réseau.

9. Système selon l'une des revendications précédentes, dans lequel ledit dispositif de facturation temps-réel (BS) est intégré dans une plate-forme de services intelligents (SCP) pour réseaux mobiles de communication.

10. Système selon l'une des revendications précédentes, dans lequel ledit dispositif de facturation temps-réel (BS) et ledit dispositif d'authentification (AS) communiquent par une interface basée sur l'interface normalisée Wd.

11. Réseau de communication comportant un système selon l'une des revendications précédentes.
